# EUROPÄISCHE PATENTSCHRIFT

(11) **EP 3 347 217 B1**
(45) Veröffentlichungstag und Bekanntmachung des Hinweises auf die Patenterteilung: **06.04.2022**
(21) Anmeldenummer: 16757912.7
(22) Anmeldetag: 30.08.2016
(51) Int. Cl.: B60G 13/00, B60G 13/14, B60G 17/015, B60G 17/02, B60G 17/033, B60G 21/055

(54) **DÄMPFUNGSSYSTEM EINES ZWEISPURIGEN FAHRZEUGS**
DAMPING SYSTEM OF A TWO-TRACK VEHICLE
SYSTÈME D'AMORTISSEMENT D'UN VÉHICULE À DEUX VOIES

(30) Priorität: 07.09.2015 DE 102015217057
(43) Veröffentlichungstag der Anmeldung: 18.07.2018
(73) Patentinhaber: Bayerische Motoren Werke Aktiengesellschaft, 80809 München (DE)
(72) Erfinder: ZUSCIK, Marian, 80807 München (DE)
(86) Internationale Anmeldenummer: PCT/EP2016/070415
(87) Internationale Veröffentlichungsnummer: WO 2017/042055

(56) Entgegenhaltungen:
- EP-A2- 1 512 560
- WO-A1-03/045719
- DE-A1-102009 047 128
- DE-A1-102009 054 672
- DE-A1-102010 008 009
- DE-A1-102013 012 755

## Beschreibung

Die Erfindung betrifft ein Betriebsverfahren eines Dämpfungssystem eines zweispurigen Fahrzeugs beziehungsweise ein Verfahren zum Bedämpfen von Schwingungen des Fahrzeugaufbaus nach dem Oberbegriff des Anspruchs 1 sowie ein entsprechend gestaltetes Dämpfungssystem. Als nächstkommender Stand der Technik wird die DE 10 2013 012 755 A1 erachtet.

In Straßenfahrzeugen bzw. Kraftfahrzeugen sind üblicherweise hydraulische Dämpfer zur Bedämpfung der Schwingungen des Fahrzeugaufbaus und teilweise auch Wankstabilisierungssysteme verbaut, welche jeweils entweder passiv, d.h. nur auf äußere Kräfte reagierend, oder semiaktiv oder aktiv ausgeführt sein können. Bei semiaktiven Systemen ist die Reaktion des Dämpfers oder eines der Wankstabilisierung dienenden Stabilisators auf eine bestimmte äußere Kraft veränderbar, während aktive Systeme selbst Kräfte in das System, d.h. in die Radaufhängung(en) einleiten können.

Ein Beispiel für aktive Dämpfer zeigt die DE 10 2014 208 404 A1 mit einer hinsichtlich ihrer Förderrichtung zwischen den beiden Arbeitskammern einer hydraulischen Dämpferzylinder-Kolben-Einheit umschaltbaren elektromotorisch betriebenen Hydraulikpumpe, bspw. einem Gerotor. Bei einem (üblichen) aktiven Wankstabilisierungssystem mit einem geteilt ausgeführten Stabilisator, dessen Hälften mittels eines zwischengeschalteten Aktuators gegeneinander tordierbar sind, ist üblicherweise kein passiver Stabilisator vorgesehen, vgl. bspw. den in der DE 10 2014 018 732 A1 gezeigten Stand der Technik. Hingegen zeigt bspw. die DE 10 2005 043 176 A1 ein Beispiel für eine Koppelung eines passiven Stabilisators mit einem aktiven Stabilisator. Dabei ist zumeist die Kopplung zu dem Aktuator der Wankstabilisierung möglichst weich ausgeführt, wodurch Wankbewegungen des Fahrzeug-Aufbaus nur bis etwa 5 Hz (Hertz) beeinflussbar sind - mit ursächlich für diesen geringen Frequenzbereich ist im Übrigen auch die Ausführung der Aktuatoren als hydraulische Schwenkmotoren, deren Reaktionszeit systembedingt relativ gering ist.

Weiterhin ist ein aktives Fahrwerk für ein Kraftfahrzeug bzw. ein zugehöriges Drehfederstabsystem in dessen Radaafhängungen aus der DE 10 2013 012 755 A1 bekannt. Bei der dort gezeigten Radaufhängung für jeweils zwei sich gegenüber liegende Räder ist jedem Rad ein Aktuator zur Niveauänderung des Kraftfahrzeugs zugeordnet. Hierbei besteht der Aktuator aus einem Verstellantrieb aus Elektromotor und Getriebe und ist mit einem gefederten Teil des Fahrwerks verbunden. Ein abgewinkelter Torsionsstab mit Drehfedereigenschaften erstreckt sich dabei in den Aktuator hinein bis zu dessen Ende, um eine ausreichende Länge des in Vertikalrichtung auf das gefederte Teil einwirkenden Torsionsstabs zu erzielen. Auch hiermit kann eine Niveauverstellung erzielt werden und es kann Wank- und Nickbewegungen des Fahrzeugaufbaus entgegen gewirkt werden.

Die eingangs genannte DE 10 2006 009 524 A1 zeigt eine weitere Anordnung eines unerwünschten Wankbewegungen und/oder Nickbewegungen und/oder Gierbewegungen des Fahrzeug-Aufbaus entgegen wirkenden dort sog. einteiligen Drehstabs, der zunächst wie ein (üblicher) Quer-Stabilisator aufgebaut ist und aus einem Torsionsstab sowie zwei sich zu dessen beiden Seiten anschließenden Drehschenkeln besteht. Im Übergangsbereich vom Torsionsstab zu jedem Drehschenkel ist jeweils ein am Fahrzeug-Aufbau gelagerter Aktuator vorgesehen. Diese Aktuatoren können als eine gesteuerte Dauermagnetkupplung oder als gesteuerte Elektromagnetkupplung oder als ein hydraulisch gesteuerter Schwenkmotor oder als eine verstellbare Viscokupplung ausgebildet sein. Im Falle dass die Aktuatoren Kupplungen sind, handelt es sich hier um ein semiaktives System, dessen Reaktionsverhalten auf äußere Kräfte veränderbar ist; aber auch der in diesem bekannten Stand der Technik gezeigte hydraulische Schwenkmotor kann nur auf vom Fahrzeugaufbau oder von der Fahrbahn eingeleitete Kräfte reagieren, selbst jedoch keine Kraft stellen, da hierfür eine das Hydraulikmedium fördernde Pumpe benötigt würde.

Die Frequenzen von Schwingungen des Fahrzeug-Aufbaus, welche mit den bekannten Stabilisator-Anordnungen bekämpft werden können, liegen bekanntlich in der Größenordnung von 1 Hertz bis 5 Hertz. Vertikal-Schwingungen der Räder bzw. der sog. ungefederten Massen der Radaufhängung (bspw. gegenüber dem Fahrzeug-Aufbau) liegen im Frequenzbereich von 12 Hertz bis 30 Hertz. Für die Bedämpfung dieser Schwingungen sind im bekannten Stand der Technik stets die bekannten hydraulischen Schwingungsdämpfer, auch Stoßdämpfer genannt, vorgesehen, und zwar zumeist als passive Dämpfer. Derzeit werden jedoch auch aktive Dämpfer (bspw. wie in der weiter oben genannten DE 10 2014 208 404 A1 gezeigt) untersucht bzw. entwickelt.

Hiermit soll nun ein Verfahren zum Betrieb eines aktives Dämpfungssystem eines zweispurigen Fahrzeugs aufgezeigt werden, welches aktiv, d.h. durch das Einbringen von Kräften in das System bis in einen höheren Frequenzbereich als bislang üblich nicht nur Schwingungen des Fahrzeugaufbaus sondern auch der Fahrzeug-Räder bzw. der ungefederten Massen der Fzg.-Radaufhängung beeinflussen oder bedämpfen kann (= Aufgabe der vorliegenden Erfindung).

Die Lösung dieser Aufgabe ergibt sich mit den Merkmalen des Anspruchs 1, während in den abhängigen Ansprüchen ein vorteilhaftes Dämpfungssystems zur Umsetzung des erfindungsgemäßen Verfahrens weitergebildet wird.

Somit wird die Aufgabe gelöst durch ein entsprechend den Angaben in Anspruch 1 besonders ausgestaltetes und entsprechend betriebenes aktives Dämpfungssystem für ein Fahrzeug. Dabei handelt es sich um ein zweispuriges Kraftfahrzeug. Das Dämpfungssystem umfasst an zumindest einer Achse des Fahrzeugs einen passiven Stabilisator. Der passive Stabilisator ist wie üblich zwischen zwei gegenüberliegenden Radaufhängungen einer Achse des Fahrzeugs angeordnet. Insbesondere handelt es sich dabei um Einzelradaufhängung. Die beiden Enden des Stabilisators sind mit den ungefederten Massen des Fahrzeugs verbunden. Beispielsweise erfolgt eine Verbindung des Stabilisators mit dem Radträger oder einem radführenden Element (bspw. einem Lenker).

Des Weiteren umfasst das entsprechend ausgestaltete Dämpfungssystem an zumindest einer Achse des Fahrzeugs für jedes Rad dieser Achse einen ansteuerbaren und die Einleitung einer Kraft in das System ermöglichenden Aktuator. Dieser Aktuator weist einen elektromotorischen Antrieb auf. Der Antrieb ist angeordnet um ein Drehmoment auf den Stabilisator und insbesondere auf den dem jeweiligen Rad zugewandten Abschnitt des Stabilisators aufzubringen. Hierzu ist der Stabilisator vorzugsweise im Aktuator gelagert. Der Aktuator seinerseits ist am Fahrzeugaufbau befestigt. Der Begriff "Fahrzeugaufbau" ist hier breit zu verstehen und umfasst beispielsweise die Karosserie (d.h. den Fahrzeug-Aufbau), einen Achsträger oder Fahrschemel und Hilfsrahmen. Durch die Lagerung des Stabilisators im Aktuator kann der Aktuator ein herkömmliches Gummilager oder dgl. des Stabilisators, d.h. allgemein ein übliches Stabilisator-Lager, welches eine Verdrehbewegung des Stabilisators ermöglicht, ersetzen. Dabei kann der Stabilisator lediglich über die beiden Aktuatoren (und somit ohne herkömmlichen Lager) gegenüber dem Fahrzeugaufbau gelagert sein; alternativ können jedoch neben der Lagerung des Stabilisators in den beiden Aktuatoren der Achse auch noch herkömmliche Stabilisatorlager vorgesehen sein, in denen der Stabilisator bzw. genauer dessen Drehstab verdrehbar am Fahrzeugaufbau abgestützt ist. Am Drehstab entstehen nämlich durch die Beaufschlagung mit einem Drehmoment durch den Aktuator mechanische Spannungen, welche den Aktuator nicht nur in Drehrichtung sondern auch in Axialrichtung und Radialrichtung belasten können. Solche zusätzlichen Belastungen können durch zusätzliche herkömmliche Stabilisatorlager gering gehalten werden.

Indem ein Elektromotor als Antrieb des Aktuators mit gegenüber hydraulischen Systemen signifikant kürzerer Ansprechzeit vorgesehen ist, können zunächst theoretisch durch geeignete Regelung dieses elektromotorischen Aktuator-Antriebs Schwingungen im Frequenzbereich zwischen 0 Hertz und 20 Hertz erfolgreich bedämpft werden, und zwar unabhängig davon, ob es sich um Schwingungen der gefederten Masse, d.h. des Fahrzeugaufbaus, oder der ungefederten Masse, d.h. im wesentlichen des Rades bzw. der Räder mit zugehörigen Bestandteilen handelt. Dabei erfolgt ein aktives Dämpfen durch Einbringen von Kräften in das System, jedoch muss die Bedämpfung nicht ausschließlich hierdurch erfolgen, was im kennzeichnenden Teil des unabhängigen Patentanspruchs durch das Wort "auch" ausgedrückt ist. Vielmehr kann der elektromotorische Antrieb auch elektromechanisch-regenerativ betrieben werden, wobei der Elektromotor als "bremsender" Generator wirkt und in diesem durch ein gerichtetes bremsendes Drehmoment elektrische Energie erzeugt wird, welche in einem Akkumulator speicherbar oder einem anderen elektrischen Verbraucher des Kraftfahrzeugs zuführbar ist.

Weiterhin sind an sich übliche hydraulische Schwingungsdämpfer zwischen dem Fahrzeugaufbau und der ungefederten Masse einer erfindungsgemäß ausgebildeten Achse eines Fahrzeugs vorgesehen, wobei diese Schwingungsdämpfer oder Stoßdämpfer so abgestimmt sind, dass sie in denjenigen Arbeitspunkten, in denen das durch die genannten Aktuatoren gebildete aktive Dämpfungssystem nicht selbst ausreichend hohe Kräfte stellen kann, diese erforderlichen Dämpfkräfte aufbringt. Erfindungsgemäß sind nun im Zusammenwirken mit solchen hydraulischen Schwingungsdämpfern die Aktuatoren dahingehend ausgelegt, Schwingungen, seien es Schwingungen des Fahrzeugaufbaus oder seien es Vertikal-Schwingungen der ungefederten Massen der Radaufhängungen einer erfindungsgemäß gestalteten Fzg.-Achse in einem Frequenzbereich bis zur Größenordnung von 30 Hertz zu bedämpfen. Dementsprechend werden die Aktuatoren nicht nur angesteuert, sondern es ist m Hinblick auf die gewünschte Bedämpfung relativ hochfrequenter Fahrzeugaufbau-Schwingungen und Rad-Schwingungen (bis zu 30 Hz) auch die mechanische Eigenfrequenz eines erfindungsgemäßen Dämpfungssystems gezielt einstellt. Beispielsweise die Positionierung der Kraftübertragung zwischen dem elektromotorischen Antrieb und dem Stabilisator-Drehstab verändert den Abstand des Antriebs zu den seitlichen Enden des Stabilisators und somit die Wellenlänge von letztlich über die Hebelelemente übertragenen Schwingungen. Dadurch verändert sich auch die mechanische Eigenfrequenz. So ermöglicht die Auswahl der mechanischen Steifigkeit eines erfindungsgemäßen aktiven Dämpfungssystems beziehungsweise von dessen Eigenfrequenz eine Entkopplung der Eigenfrequenz zu derjenigen der ungefederten Masse des Fahrzeugs. Eine mögliche gegenseitige Beeinflussung der Resonanzereignisse der einzelnen Systeme wird dadurch vermieden. Damit ist gewährleistet, dass der bzw. die Aktuator(en) auch bei höheren Frequenzen noch wie gewünscht geregelt werden können. Wenn nämlich die beiden genannten Resonanzen nicht verstärkt wirken, sind die zu kompensierenden Schwingungen geringer und somit ist der Aktuator auch bei höheren Frequenzen in der Lage, mit seiner der zu Verfügung Leistung in ausreichendem Maße vorliegende Schwingungen zu bedämpfen. Darüber hinaus ist das erfindungsgemäße aktive Dämpfungssystem ausreichend schnell, um eine effektive Energierückgewinnung aus den Schwingungen von gefederten und ungefederten Massen zu ermöglichen, wobei es auch hier vorteilhaft ist, wenn der Aktuator möglichst wenig Energie zur Bedämpfung seiner eigenen Schwingungen benötigt, was bei dessen Auslegung hinsichtlich Eigenfrequenz geeignet berücksichtigt werden kann.

Es können die genannten Schwingungsdämpfer, welche auch die erfindungsgemäßen Aktuatoren vor Überlast durch von außen eingeleitete Kräfte schützen, dahingehend ausgelegt sein, diejenigen Schwingungen, welche durch die Massenträgheit der besagten Aktuatoren hervorgerufen sind, zu verringern. Im Übrigen kann es sich bei den hydraulischen Schwingungsdämpfern auch um semiaktive Dämpfer handeln. Beispielsweise können die Schwingungsdämpfer ausgebildet sein, wahlweise zwei verschiedene Dämpfkraftlinien darzustellen, nämlich eine erste im Zusammenwirken mit den Aktuatoren des passiven Stabilisators und eine andere zweite für den Fail-Safe-Fall, d.h. falls einer oder beide Aktuatoren einer Achse ausfallen sollten.

Kurz erläutert sei an dieser Stelle, weshalb vorstehend zwar von Vertikal-Schwingungen der Räder bzw. der ungefederten Massen gesprochen wird, während für den Fahrzeug-Aufbau nur von zu bedämpfenden Schwingungen (allgemein) die Rede ist. Mittels der beiden Aktuatoren an einer Fzg.-Achse können am Fzg.-Aufbau nämlich nicht nur Hubbewegungen bedämpft werden, sondern es können auch Wankbewegungen des Fahrzeugaufbaus in gewünschter Weise beeinflusst werden, bei welchen es sich ja nicht um reine Vertikalschwingungen handelt. Wäre im Übrigen der Stabilisator bzw. dessen Drehstab in Fahrzeuglängsrichtung ausgerichtet und erstreckte sich somit bspw. zwischen den beiden linken Rädern eines zweiachsigen Fahrzeugs, so könnten mit einem solchen Dämpfungssystem anstelle der Wankbewegungen die Nickbewegungen des Fahrzeugaufbaus bedämpft werden. Letzteres ist selbstverständlich auch mit in Fzg.-Querrichtung ausgerichteten und erfindungsgemäß gestalteten Stabilisatoren möglich, wenn beide Achsen des Fahrzeugs ein erfindungsgemäßes Dämpfungssystem aufweisen. Im übrigen können auch Gierbewegungen des Fahrzeugs mit einem erfindungsgemäßen Dämpfungssystem in gewünschter Weise beeinflusst werden, da sich bekanntlich die Verteilung des Wank-Abstützmoments zwischen der Vorderachse und der Hinterachse des Fahrzeugs auf dessen Gierneigung oder Gierrate auswirkt. Als Vorteil eines erfindungsgemäßen Dämpfungssystems sei in diesem Zusammenhang genannt, dass eine für einen Fahrzustand erforderliche Mindestdämpfung insbesondere durch die vorgeschlagenen hydraulischen Schwingungsdämpfer und eine erforderliche Mindest-Wankabstützung durch den passiven Stabilisator gewährleistet ist. Falls der Aktuator ausgelegt ist, im Störungsfall ebenso wie im bereits erläuterten generatorischen Betrieb ein Widerstands-Drehmoment von nennenswerter Höhe zu erzeugen, kann eine ausreichende Systemsicherheit im Übrigen auch ohne die hier fakultativ vorgeschlagenen hydraulischen Schwingungsdämpfer dargestellt werden.

Im weiteren wird auf die Regelung der Aktuatoren bzw. von deren (elektromotorischem) Antrieb dahingehend, dass Vertikal-Schwingungen des jeweiligen Rades oder der sog. ungefederten Masse und/oder Schwingungen des Fahrzeugaufbaus jeweils in einem Frequenzbereich bis zur Größenordnung von 30 Hertz bedämpft werden, näher eingegangen. Die Regelstrecke oder Regelschleife eines erfindungsgemäßen Dämpfungssystems umfasst vorteilhafterweise zumindest einen Kraft/Moment-Regler und einen Stromregler, dem bzw. denen ein Fahrzeug-Vertikaldynamikregler übergeordnet ist. Der Kraft/Moment-Regler dient zum Berechnen eines elektrischen Sollstroms für den jeweiligen Aktuator-Elektromotor. Dieser Sollstrom wird basierend auf einem diesem Regler vorgegebenen Soll-Kraft/Moment errechnet. Das Soll-Kraft/Moment gibt zumindest eine Kraft und/oder zumindest ein Moment vor. Das SollKraft/Moment wird vom Fahrzeug-Vertikaldynamikregler vorgegeben und ergibt sich beispielsweise aus geeigneten externen Messgrößen und/oder einem vorliegend gewählten Fahrmodus oder einem Fahrwunsch. Der Regelkreis des Kraft/Moment-Reglers schließt sich durch ein Ist-Kraft/Moment, welches beispielsweise am Aktuator oder am Stabilisator ermittelt wird.

Als Ausgangsgröße berechnet der Kraft/Moment-Regler einen Sollstrom. Außer den gemessenen Aktuator-Zustandsgrößen wie elektrischem Strom, elektrischer Spannung, Motordrehzahl, Motordrehwinkel, Motormoment bzw. -kraft (des Elektromotors) kann der Kraft/Moment-Regler auch am Fahrzeug gemessene Zustandsgrößen (oder auch andere Signale) verwenden. Dabei kann das Moment des Elektromotors auch geschätzt werden. Da zwischen der Größe des elektrischen Stroms für den Antrieb und der Kraft bzw. dem Moment, welches durch den Antrieb aufgebracht wird, lediglich ein Faktor liegt, kann durch den Kraft/Moment-Regler direkt der Sollstrom berechnet werden. Weiterhin kann der Kraft/Moment-Regler eine Nullmomenten-Regelung darstellen, welche die Wirkung des Aktuators bei einer externen kinematischen Störgrößenanregung minimiert. Der Kraft/Moment-Regler ist bevorzugt dazu ausgebildet, bei beiden erwähnten Regelansätzen die eigenen Schwingungen der Aktuator-Massenträgheit zu kompensieren. Der Sollstrom dient dabei als Eingangsgröße für den Stromregler. Der Stromregler ist an eine Versorgungsspannung angeschlossen und steuert den elektromotorischen Antrieb an. Das Ansteuern des Antriebs erfolgt basierend auf dem Sollstrom und einem elektrischen Ist-Strom, welcher am Antrieb bzw. Elektromotor ermittelt wird.

Ergänzend zu den beiden beschriebenen Reglern ist als ein dritter Regler der bereits genannte Fahrzeug-Vertikaldynamikregler vorgesehen. In diesem Regler läuft die Signalaufbereitung und die Berechnung desjenigen Soll-Kraft/Moments, mit welcher ein gewünschter Zustand vom Fahrzeugaufbau und von den ungefederten Massen erreicht wird. Das errechnete Soll-Kraft/Moment wiederum dient als Eingangsgröße für den beschriebenen Kraft/Moment-Regler. Als Eingangsgrößen bzw. Messgrößen nutzt der Fahrzeug-Vertikaldynamikregler dabei bevorzugt Beschleunigungen der ungefederten Massen, Fzg.-Aufbau-Beschleunigungen, Aufbau-Raten, Radhube und/oder die Zustandsgrößen des Aktuators (Strom, Spannung, Motordrehzahl, Motordrehwinkel, Motormoment bzw. -kraft).

Vorzugsweise besitzt der gesamte Regelkreis, umfassend den Stromregler, den Kraft/Moment-Regler und bevorzugt auch den Fahrzeug-Vertikaldynamikregler eine Latenzzeit von maximal 3 Millisekunden - insbesondere im Hinblick auf die gewünschte Bedämpfung von Schwingungen des Rades oder der sog. ungefederten Masse und/oder des Fahrzeugaufbaus in einem Frequenzbereich bis zur Größenordnung von 30 Hertz. Die Latenzzeit beschreibt dabei die Verzögerung bei Datentransport und Datenberechnung innerhalb des Regelkreises. In diesem Sinne ist es vorteilhaft, wenn der Kraft/Moment-Regler und der Fahrzeug-Vertikaldynamikregler ineinander integriert sind, da hiermit keine zusätzlichen Latenzzeiten beim Datentransport zwischen dem Fahrzeug-Vertikaldynamikregler und dem Kraft/Moment-Regler anfallen. Im Hinblick auf den zu dämpfenden Frequenzbereich sollten die Regler ausreichend schnell arbeiten und die Latenzzeit der gesamten Regelschleife möglichst klein halten werden. Hierfür weist der Fahrzeug-Vertikaldynamikregler eine Abtastrate von zumindest 400 Hz, vorzugsweise zumindest 800 Hz, auf. Vorzugsweise weist der Kraft/Moment-Regler eine Abtastrate von zumindest 1 kHz, vorzugsweise zumindest 2 kHz, auf. Diese Werte gelten auch in derjenigen Umsetzungsvariante, bei welcher der Fahrzeug-Vertikaldynamikregler in den Kraft/Moment-Regler integriert ist. Der Stromregler weist bevorzugt eine Abtastrate von zumindest 10 kHz, insbesondere zumindest 20 kHz, auf.

Um bei einem erfindungsgemäßen Dämpfungssystem dessen Zusammenbau und den Anbau am Fahrzeug möglichst einfach zu gestalten, ist der passive Stabilisator mehrteilig ausgeführt. Bevorzugt umfasst der Stabilisator zwei Hebelelemente und einen Drehstab, welcher seinerseits aus mehreren hintereinander, d.h. in Reihe angeordneten und drehfest miteinander verbundenen Einzelstäben zusammengesetzt sein kann. Die Hebelelemente sind mit ihren dem Drehstab abgewandten Ende mit der jeweiligen Radaufhängungen verbunden. Die Hebelelemente verlaufen hierfür zumindest näherungsweise in Fzg.-Längsrichtung, während der (achsindividuelle) Drehstab in Fzg.-Querrichtung ausgerichtet ist. Dabei können die Hebelelemente mit dem Drehstab einen Winkel in der Größenordnung von 70°bis 110°einschließen, womit sichergestellt ist, dass der Drehstab vorrangig auf Torsion belastet wird, während die Hebelelemente im Wesentlichen auf Biegung belastet werden. Die Hebelelemente können jedoch auch abgewinkelt ausgebildet sein, mit einem größeren sich zumindest annährend in Fzg.-Längsrichtung erstreckenden Abschnitt und einem relativ kurzen sich in Fzg.-Querrichtung erstreckenden Abschnitt, welcher auch als ein (bereits genannter) Einzelstab des Drehstabes bezeichnet werden kann und an welchen sich entweder der "eigentliche" Drehstab oder ein erfindungsgemäßer Aktuator (bspw. Elektromotor) mit seiner Aktuatorwelle anschließt. In jedem vorstehend genannten Fall verbindet der Drehstab die beiden Hebelelemente einer Achse (bzw. deren sich zumindest annähernd in Fzg.-Längsrichtung erstreckende Abschnitte) drehfest, jedoch über den Drehstab gegeneinander um dessen Längsachse tordierbar miteinander. Dabei kann der Aktuator quasi auf dem Drehstab aufsitzen und damit sein Drehmoment direkt quasi noch innerhalb des Aktuators auf den Drehstab aufbringen. Alternativ kann der Aktuator aber auch auf einem vorstehend genannten und sich in Fzg.-Querrichtung erstreckenden Abschnitt eines abgewinkelten Hebelarms (und somit auf dem entsprechenden Einzelstab des Drehstabs) angeordnet sein und sein Drehmoment direkt über diesen abgewinkelt ausgebildeten Hebelarm in das Dämpfungssystem einbringen.

Nach einer weiteren möglichen und vorteilhaften Ausführungsform ist ein in Fahrzeug-Querrichtung verlaufender Abschnitt eines einem ersten Rad der Achse zugeordneten abgewinkelten Hebelarmes (bzw. ein sog. Einzelstab des Drehstabes) mit dem ersten Ende einer (ebenfalls in Fzg.-Querrichtung liegenden) Welle des dem ersten Rad zugeordneten Aktuators, bspw. Elektromotors verbunden, an deren anderes Ende sich der Drehstab drehfest anschließt. Dieser erstreckt sich dann bis zur Aktuator-Welle des dem anderen Rad dieser Achse zugeordneten Aktuators, an deren anderes, d.h. dem Drehstab gegenüberliegendes Ende sich der andere Hebelarm (für das andere Rad dieser Achse) drehfest verbunden anschließt. Insbesondere für eine solche Ausbildung ist es vorteilhaft, wenn die innerhalb der Aktuatoren liegenden Einzelstäbe des Drehstabs, welche die besagten Aktuator-Wellen bilden können, aus einem höherfesten Material bestehen und von geringerem Durchmesser sind als diejenigen Drehstab-Einzelstäbe außerhalb der Aktuatoren. Hierdurch wird das Dreh-Massenträgheitsmoment der Aktuatoren gering gehalten. Bei einer solchen Gestaltung ist es mechanisch vorteilhaft, wenn die außerhalb der Aktuatoren liegenden Einzelstäbe des Drehstabes in eigenständigen und an sich üblichen Stabilisatorlagern drehbar gelagert sind.

Nach einer weiteren möglichen Ausführungsform umfasst der Aktuator eine Hohlwellenanordnung. Diese Hohlwellenanordnung weist eine oder mehrere Hohlwellen auf. Der Stabilisator, genauer dessen Drehstab verläuft durch die Hohlwellenanordnung. Über eine steife Verbindung ist die Hohlwellenanordnung drehfest mit dem Stabilisator verbunden. Mittels des Aktuator-Antriebs ist ein Drehmoment auf die Hohlwellenanordnung und von dieser auf den Stabilisator-Drehstab übertragbar. Dabei umfasst in einer einfachen Ausgestaltung die Hohlwellenanordnung lediglich eine Hohlwelle. Diese Hohlwelle ist drehfest mit dem Stabilisator verbunden, wobei auf diese Hohlwelle das besagte Drehmoment mittels des Antriebs übertragen werden kann. Alternativ kann die Hohlwellenanordnung mehrere koaxial hintereinander angeordnete Hohlwellen umfassen. Die mehreren in Reihe vorgesehenen Hohlwellen können beispielsweise über ein Getriebe und/oder eine Kupplung und/oder eine Bremse miteinander verbunden sein, welche ebenso wie der Elektromotor ein Bestandteil eines erfindungsgemäßen Aktuators sein können. Ein Getriebe erlaubt dabei eine Übersetzung zwischen dem elektromotorischen Antrieb und dem Stabilisator-Drehstab. Über eine Kupplung kann der Antrieb vom Stabilisator getrennt werden. Eine Kupplung ist in vorteilhafter Weise als Rutschkupplung ausgebildet. Durch eine solche Kupplung kann der Antrieb und/oder das Getriebe vor einer Überlastung durch zu hohe Drehmomente oder Drehzahlen geschützt werden. Auch eine Bremse kann insbesondere zusammen mit dem Getriebe den Antrieb bzw. Elektromotor oder allgemein den Aktuator vor hohen Drehmomenten und/oder vor zu hohen Drehzahlen schützen.

Bevorzugt ist vorgesehen, dass ein Rotor des Aktuator-Elektromotors, welcher auch als elektrische Maschine bezeichnet werden kann, koaxial mit dem Stabilisator-Drehstab bzw. mit einer vorstehend beschriebenen Hohlwellenanordnung angeordnet ist.

Diese Anordnung führt zu einem sehr kompakten Aufbau des Aktuators, da die elektrische Maschine unmittelbar auf dem Stabilisator bzw. der Hohlwellenanordnung sitzt. Ferner ist so eine steife Anbindung des elektromotorischen Antriebs an den Stabilisator möglich, sodass insbesondere auch Schwingungen mit höheren Frequenzen (nämlich im weiter oben angegebenen Frequenzbereich) von den Aktuatoren aktiv beeinflussbar sind. Dabei kann jeder Aktuator ein eigenes Gehäuse aufweisen, mit welchem er am Fahrzeugaufbau befestigt ist. Alternativ können auch die beiden Aktuatoren einer Achse über ein quasi gemeinsames Gehäuse mechanisch miteinander verbunden sein, jedoch hinsichtlich ihres Antriebs insbesondere zu den zugeordneten Hebelelementen hin voneinander getrennt sein. Auch dann ist das Gehäuse am Fahrzeugaufbau bzw. an dessen Unterboden befestigt und es sind vorzugsweise in diesem Gehäuse Lagerstellen für den Drehstab bzw. dessen Einzelstäbe des Stabilisators vorgesehen.

Weitere Einzelheiten, Merkmale und Vorteile der Erfindung ergeben sich aus der nachfolgenden Beschreibung und den Figuren. Es zeigt:
- Figur 1: eine schematische Abbildung eines Dämpfungssystems gemäß einem Ausführungsbeispiel der Erfindung
- Figur 2: eine schematische Darstellung eines Aktuators des Dämpfungssystems gemäß dem Ausführungsbeispiel der Erfindung,
- Figur 3: eine schematische Darstellung einer Dämpfungscharakteristik eines Stoßdämpfers des Dämpfungssystems gemäß dem Ausführungsbeispiel ohne Einfluss des Aktuators,
- Figur 4: eine schematische Abbildung einer Charakteristik des Aktuators des Dämpfungssystems gemäß dem Ausführungsbeispiel der Erfindung,
- Figur 5: eine schematische Darstellung eines Fahrzeugs mit einem Dämpfungssystem gemäß dem Ausführungsbeispiel der Erfindung, und
- Figur 6: eine Regelung des Dämpfungssystems gemäß dem Ausführungsbeispiel der Erfindung.

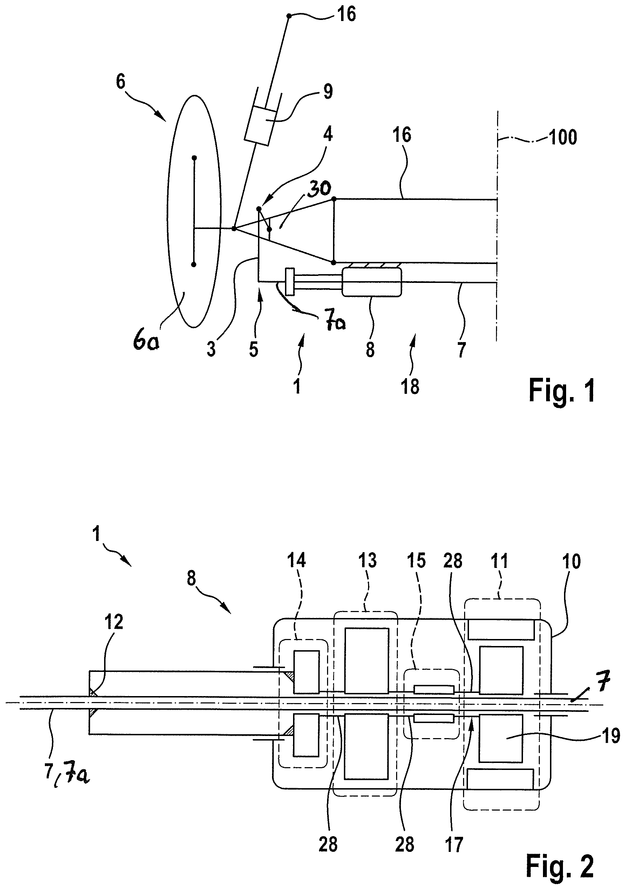

Figur 1 zeigt ein Dämpfungssystem 1 gemäß einem Ausführungsbeispiel der Erfindung. Das Dämpfungssystem 1 ist insbesondere ein aktives elektromechanisch-regeneratives Dämpfungssystem. Da das Dämpfungssystem 1 symmetrisch ausgestaltet ist, ist nur eine Hälfte des Dämpfungssystem 1 gezeigt. Das gesamte Dämpfungssystem 1 erstreckt sich symmetrisch zur Symmetrieachse 100 des zweispurigen Fahrzeugs bzw. der hier dargestellten Fahrzeug-Achse.

Das Dämpfungssystem 1 umfasst einen Stabilisator 18. Der Stabilisator 18 umfasst einen Drehstab 7 und zwei Hebelelemente 3, wobei jedes Hebelelement 3 ein erstes Ende 4 und ein zweites Ende 5 aufweist. Das erste Ende 4 des Hebelelements 3 ist mit einer Radaufhängung 6 bzw. einem Rad 6a (als ungefederte Masse) eines Fahrzeugs 2 verbunden. Die Radaufhängung 6 umfasst insbesondere einen das Rad 6a des Fahrzeugs tragenden Radträger und radführende Elemente, wie beispielsweise einen radführenden Lenker 30. Somit führt eine Einfederbewegung oder eine Ausfederbewegung des Rades 6a in Vertikalrichtung bzw. Fzg.-Hochachsrichtung zu einer Dreh-Bewegung des Hebelelements 3 um die Achse des Drehstabs 7 bzw. um eine in Fzg-Querrichtung verlaufende Drehachse, wobei das Ende 4 des Hebelelements 3 im Wesentlichen in Vertikalrichtung verlagert wird.

An seinem zweiten Ende 5 ist das Hebelelement 3 drehfest mit dem Drehstab 7 verbunden. Somit führt die soeben genannte Bewegung des Rades 6a zu einer Torsion des Drehstabs 7. Zur optimalen Kraftübertragung sowie zur optimalen Stabilität sind die Hebelelemente 3 und der Drehstab 7 drehfest miteinander verbunden.

Der Stabilisator 18 ist praktisch durch einen herkömmlichen passiven Stabilisator gebildet. So würde eine Einfederbewegung oder eine Ausfederbewegung des hier gezeigten linken Rades 6 ohne irgendwelche weiteren Einflüsse zu einer analogen Bewegung des rechten Fahrzeug-Rades jenseits der Symmetrieachse 100 führen, da die Bewegung des hier linksseitigen Hebelelements 3 durch den Drehstab 7 auf das gegenüberliegende (im Fahrzeug rechtsseitige) Hebelelement übertragen wird. Insbesondere jedoch wird durch den passiven Stabilisator eine Wankbewegung des Fahrzeug-Aufbaus 16 gegenüber den Fahrzeug-Rädern 6a bedämpft, bei welcher bspw. linksseitig das Rad 6a gegenüber dem Fzg.-Aubau 16 ausfedert, während das rechtsseitige Fzg.-Rad gegenüber dem Fzg.-Aufbau 16 einfedert. Durch geeignete Wahl der Torsionssteifigkeit des Drehstabs 7 ist ein Stabilisierungsmoment für eine passive Wankabstützung festgelegt.

Zusätzlich ist je Radaufhängung 6, d.h. für das linksseitige Rad 6a und für das jenseits der Symmetrieachse 100 liegende rechtsseitige Rad dieser Fahrzeugachse je ein Aktuator 8 vorgesehen. Der Aktuator 8 ist am Fahrzeugaufbau 16 angeordnet bzw. befestigt oder abgestützt. Der Fahrzeugaufbau 16 stellt im Übrigen die gefederte Masse des Fahrzeugs 2 dar (wohingegen insbesondere das Rad 6a mit zugehörigen Elementen die ungefederte Masse ist).

Der Aktuator 8 dient unter anderem als Lagerelement für den Stabilisator 18, insbesondere jedoch zum Aufbringen eines Drehmoments auf den Drehstab 7 und insbesondere auf denjenigen Abschnitt 7a des Drehstabs 7 bzw. Stabilisators 18, welcher dem dem Aktuator 8 benachbarten Rad 6a am nächsten liegt. Dieses aufbringbare Drehmoment dient dazu, insbesondere das dem jeweiligen Aktuator 8 jeweils nächstliegende Hebelelement 3 zu verdrehen und damit dessen erstes Ende 4 im Wesentlichen in Vertikalrichtung, d.h. in Richtung der Fahrzeug-Hochachse zu verlagern. Hierfür ist also jedem Hebelelement 3 ein Aktuator 8 zugeordnet. Dabei befindet sich der Aktuator 8 in räumlicher Nähe zu dem Hebelelement 3, sodass ein Aufbringen von Drehmoment nahezu unmittelbar eine Bewegung des zugeordneten Hebelelements 3 zur Folge hat. Somit lassen sich durch den einen Aktuator 8 Drehmomente ausgleichen, die vom anderen Aktuator auf den Stabilisator 18 aufgebracht wurden oder die durch eine extern angeregte Verdrehung des anderen Aktuators bzw. des anderen (d.h. auf der anderen Seite der Symmetrieachse 100 liegenden) Hebelelements erzeugt wurden. Auf diese Weise sind die Vertikal-Bewegungen bzw. Vertikal-Schwingungen von zwei einander gegenüberliegenden Radaufhängungen 6 bzw. Rädern 6a einer Fzg.-Achse, die über den Stabilisator 18 miteinander verbunden sind, insbesondere auch unabhängig voneinander einstellbar bzw. regelbar oder geregelt bedämpfbar. Zur Unterstützung des Aktuators 8 beim Bedämpfen von Vertikalbewegungen des Rades 6a gegenüber dem Fzg.-Aufbau 16 ist außerdem je Rad 6a ein Stoßdämpfer 9 vorhanden. Mit dem bzw. den Stoßdämpfer(n) 9 sind die Rad-Einfederbewegungen und Rad-Ausfederbewegungen im Wesentlichen wie üblich bedämpfbar.

Eine mögliche Ausführungsform eines erfindungsgemäßen Aktuators 8 ist detailliert in Figur 2 dargestellt. So umfasst der Aktuator 8 einen Antrieb 11. Der Antrieb 11 ist eine elektrische Maschine bzw. ein auch als Generator betreibbarer Elektromotor. Über eine Hohlwellenanordnung 17 ist der Stabilisator 18 im Antrieb 11 gelagert. Hierzu umfasst der Antrieb 11 einen Rotor 19. Dieser Rotor 19 sitzt koaxial auf der Hohlwellenanordnung 17. Der Drehstab 7 des Stabilisators 18 wiederum steckt in der Hohlwellenanordnung 17.

Mit dem Antrieb 11 ist ein Getriebe 13 antreibbar, das vorteilhafterweise eine Rutschkupplung 14 antreibt. Die Rutschkupplung 14 ist schließlich über eine Verbindung 12 mit dem Drehstab 7 verbunden. Somit ist es dem Antrieb 11 ermöglicht, über die Rutschkupplung 14 und über das Getriebe 13 ein Drehmoment auf den Drehstab 7 aufzubringen. Alternativ kann auf die Rutschkupplung 14 verzichtet werden, sodass der Antrieb 11 lediglich über das Getriebe 13 ein Drehmoment auf den Drehstab 7 aufbringt. Wie zuvor beschrieben bewirkt ein Aufbringen von Drehmoment auf den Stabilisator 18 eine Rotation des Hebelelements 3. Der Aktuator 8 kann daher über den Antrieb 11 aktiv eine Bewegung des Hebelelements 3 beeinflussen.

Weiterhin ist hier eine Bremse 15 vorhanden, mit der eine Bewegung des Aktuators 8 abbremsbar ist. Sollte eine zu hohe Drehzahl beim Antrieb 11 vorhanden sein, so kann der Antrieb 11 über die Bremse 15 und die Rutschkupplung 14 geschützt werden. Sollte der Antrieb 11 deaktiviert werden, so verbleibt die passive Dämpfwirkung und Reibung des Aktuators 8 und ein Stabilisierungsmoment des Drehstabs 7.

Die Hohlwellenanordnung 17 umfasst mehrere koaxial hintereinander, d h. in Reihe angeordnete und miteinander drehfest verbundene Hohlwellen 28. Über diese Hohlwellen 28 sind somit die einzelnen Elemente wie Antrieb 11, Bremse 15, Getriebe 13 und Kupplung 14 untereinander drehfest gekoppelt.

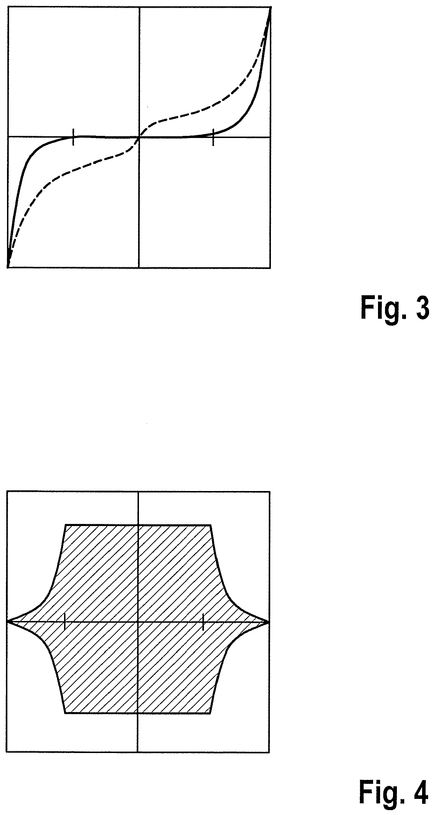

Die passive Dämpfwirkung des Stoßdämpfers 9 weist eine an den Aktuator 8 angepasste Charakteristik auf. So ist in Figur 3 eine Dämpfungscharakteristik des Stoßdämpfers 9 gezeigt, wobei auf der Abszisse eine Geschwindigkeit aufgetragen ist, während die Ordinate eine Kraft zeigt. In Figur 4 die Charakteristik des Antriebs 11 des Aktuators 8 gezeigt, wobei über die Abszisse eine Winkelgeschwindigkeit und über die Ordinate ein Drehmoment aufgetragen ist. Wie ersichtlich kann alleine mit Stoßdämpfern 9 bzw. mit hydraulischen Schwingungsdämpfern in den Radaufhängungen eines Kraftfahrzeuges auch nur die Fig.3 figürlich dargestellte Dämpfungscharakteristik erzeugt werden, wohingegen mit einem erfindungsgemäßen Dämpfungssystem das in Fig.4 gezeigte Dämpfungsverhalten darstellbar ist und somit eine erheblich vielfältigere Möglichkeit zur Darstellung von dämpfenden Kräften über Geschwindigkeiten bzw. Schwingungen des Fzg.-Aufbaus 16 und/oder der Räder 6a des Fahrzeugs gegeben ist - vorteilhafterweise bis hin zu Frequenzen in der Größenordnung von 30 Hz.

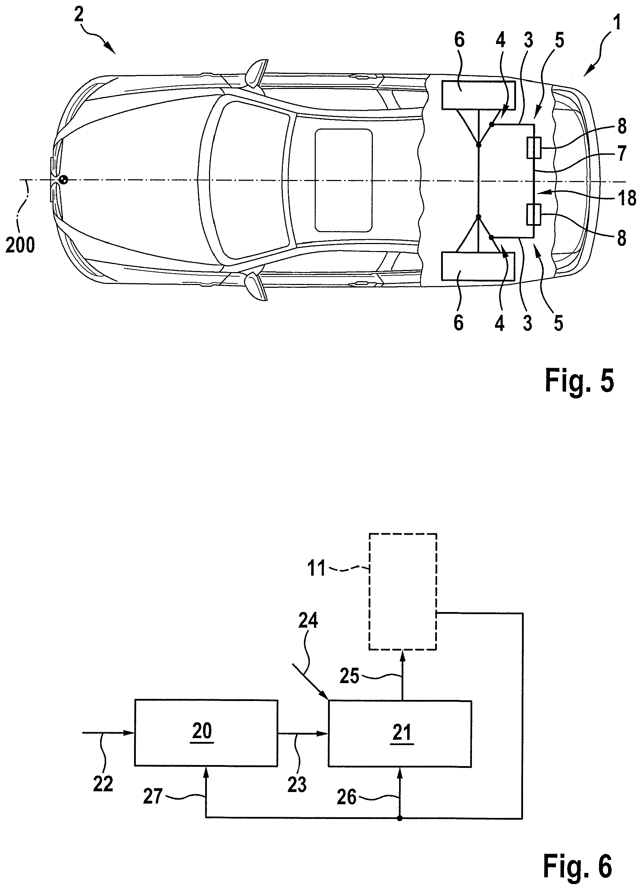

Figur 5 zeigt ein Fahrzeug 2 mit dem aktiven Dämpfungssystem 1 hier nur für die Fzg.-Hinterachse dargestellt. Das Dämpfungssystem 1 entspricht dabei dem zuvor beschriebenen und in Figur 1 sowie in Figur 2 gezeigten Dämpfungssystem 1. Selbstverständlich kann sich ein analoges Dämpfungssystem 1 auch an der Fzg.-Vorderachse befinden bzw. ist auch an der Fzg.-Vorderachse vorgesehen.

Figur 6 zeigt in schematischer Darstellung die Regelung des Antriebs 11 des Aktuators 8. Ein Kraft/Moment-Regler 20 dient zum Berechnen eines Sollstroms 23. Dieser Sollstrom 23 wird basierend auf einem Soll-Kraft/Moment, welches über die Schnittstelle 22 an den Kraft/Moment-Regler 20 weitergeleitet wird, errechnet. Dieses SollKraft/Moment wird von einem übergeordneten Fahrzeug-Vertikaldynamik-Regler vorgegeben, d.h. im Fahrzeug errechnet und ergibt sich beispielsweise aus externen Messgrößen, einem Fahrmodus, einem Fahrwunsch etc. Dieser Fahrzeug-Vertikaldynamikregler kann zusammen mit dem Kraft/Moment-Reglers 20 am dem gleichen elektronischen Steuergerät implementiert sein. Außer dem Soll-Kraft/Moment, können über die Schnittstelle 22 auch andere am Fahrzeug gemessene oder in anderen Steuergeräten berechnete bzw. geschätzte Größen an den Kraft/Moment-Regler 20 weitergeleitet werden.

Der Regelkreis des Kraft/Moment-Reglers 20 schließt sich durch ein Ist-Kraft/Moment 27, das beispielsweise am Aktuator 8 oder am Stabilisator 18 ermittelt wird. Als Ausgangsgröße berechnet der Kraft/Moment-Regler 20 den Sollstrom 23. Der Sollstrom 23 dient als Eingangsgröße für einen Stromregler 21. Der Stromregler 21 ist an eine elektrische Versorgungsspannung 24 angeschlossen und steuert den Antrieb 11 an. Das Ansteuern des Antriebs 11 erfolgt basierend auf dem elektrischen Sollstrom 23 und einem elektrischen Ist-Strom 26, der am Antrieb 11 ermittelt wird.

Durch die Konfiguration und Integration des aktiven Dämpfungssystems 1 im Fahrzeug 2 wird eine Regelbarkeit von Schwingungen bei hohen Frequenzen, nämlich im angegebenen Frequenzbereich bis zu 30 Hertz gewährleistet. Da die Dämpfkräfte in den Fahrzeugaufbau 16 parallel über den Stoßdämpfer 9 aber auch über das Gehäuse 10 des Aktuators 8 und über das Ende 4 des Hebelelements 3 übertragen werden, sind diese Komponenten weniger belastet als bei ähnlichen Systemen, wo alle Kräfte meistens nur über den Stoßdämpfer 9 übertragen werden.

Selbst in der Rückfallebene, in der der Aktuator 8 aufgrund eines Fehlers oder aufgrund von Überbelastung abgeschaltet wird, besteht keine Gefahr des Übersteuerns oder der Kippanfälligkeit für das Fahrzeug, da die Stoßdämpfer 9 und der Stabilisator 18 ausreichende und abgestimmte Kräfte erzeugen, die auch weiterhin für eine endsprechende passive Sicherheit sorgen. Aus diesem Grund ist die Funktionalität des Aktuators 8 nicht notwendig um die passive Sicherheit des Fahrzeugs zu garantieren. Die Kontrollierbarkeit des Fahrzeugs 2 ist damit in allen Fahrsituationen auch in der Rückfallebene sichergestellt.

## Patentansprüche

1. Verfahren zum Bedämpfen von Schwingungen des Fahrzeugaufbaus eines zweispurigen Fahrzeugs (2) welches einen passiven Stabilisator (18) mit einem in Fahrzeug-Querrichtung verlaufenden Drehstab (7) und sich endseitig an diesen anschließenden und mit den einander gegenüberliegenden Radaufhängungen (6) einer Achse des Fahrzeugs (2) verbundenen Hebelelementen (3) umfasst und weiterhin zwei jeweils einem Rad (6a) der Radaufhängung zugeordneten und am Fahrzeugaufbau (16) gelagerte und als Elektromotoren ausgebildete Aktuatoren (8) mit jeweils einem Antrieb (11) aufweist, mit dem ein Drehmoment auf den dem jeweiligen Rad (6a) zugewandten Abschnitt (7a) des Stabilisators (18) aufbringbar ist,
und wobei jedem Aktuator (8) ein hydraulischer Schwingungsdämpfer (9) in jeder Radaufhängung (6) parallel geschaltet ist
**dadurch gekennzeichnet, dass**
die Aktuatoren (8) mit den hydraulischen Schwingungsdämpfern (9) als ein Dämpfungssystem (1) fungieren, welches derart ausgelegt ist, dass dessen Eigenfrequenz von derjenigen der ungefederten Masse des Fahrzeugs entkoppelt ist, so dass im Zusammenwirken mit den geeignet ausgelegten hydraulischen Schwingungsdämpfern,
durch geeignete Regelung des Antriebs (11) der Aktuatoren (8) und somit durch aktive Einleitung von Kräften in das System in höheren Frequenzen bis zur Größenordnung von 20 Hertz bis 30 Hertz neben den Schwingungen des Fahrzeugaufbaus (16) auch Vertikal-Schwingungen des jeweiligen Rades (6a) oder der sogenannten ungefederten Masse und im Frequenzbereich zwischen 0 Hertz bis zur Größenordnung von 30 Hertz bedämpft werden.

2. Verfahren nach Anspruch 1, wobei an einem zweiachsigen Fahrzeug der Aktuator-Antrieb (11) solchermaßen geregelt wird, das Fahrzeugaufbau-Bewegungen des Hubens und/oder Wankens und/oder Nickens und/oder Gierens im Sinne einer Reduzierung beeinflusst werden.

3. Dämpfungssystem eines zweispurigen Fahrzeugs zur Durchführung des Verfahrens nach Anspruch 1 oder 2 mit den darin genannten gegenständlichen Merkmalen und einem Regler (20, 21) zur entsprechenden Regelung des Aktuator-Antriebs (11), welcher solchermaßen ausgelegt ist, dass auch ohne hydraulische Schwingungsdämpfer (9) Schwingungen im Frequenzbereich zwischen 0 Hertz und 20 Hertz erfolgreich bedämpft werden.

4. Dämpfungssystem nach Anspruch 3, wobei der Drehstab (7) des Stabilisators (18) in den Aktuatoren (8) gelagert ist.

5. Dämpfungssystem nach einem der Ansprüche 3, 4, wobei der Drehstab (7) aus mehreren in Reihe angeordneten und drehfest miteinander verbundenen Einzelstäben besteht und der Stabilisator (18) aus dem Drehstab und den mit diesem endseitig fest verbundenen Hebelelementen (3) besteht.

6. Dämpfungssystem nach Anspruch 5, wobei die innerhalb der Aktuatoren (8) liegenden Einzelstäbe des Drehstabs (7) aus einem höherfesten Material bestehen und von geringerem Durchmesser sind als diejenigen außerhalb der Aktuatoren (8).

7. Dämpfungssystem nach einem der Ansprüche 3- 6, wobei jeder Aktuator (8) eine Hohlwellenanordnung (17) umfasst, auf die mittels eines koaxial hierzu angeordneten Rotors (19) des Antriebes (11) oder Aktuators (8) ein Drehmoment übertragbar ist und durch welche Hohlwellenanordnung hindurch der Drehstab (7) des Stabilisators (18) verläuft, der über eine Verbindung (12) drehfest mit der Hohlwellenanordnung (17) verbunden ist.

8. Dämpfungssystem nach Anspruch 7, wobei zwischen dem Antrieb (11) und der genannten Verbindung (12) ein Getriebe (13) und/oder eine Kupplung (14) und/oder eine Bremse (15) in der Hohlwellenanordnung (17) vorgesehen ist.

9. Dämpfungssystem nach einem der Ansprüche 3 - 8, mit einem übergeordneten Fahrzeug-Vertikaldynamikregler, welcher im Hinblick auf eine gewünschte Reduzierung von Schwingungen des Fahrzeugaufbaus (16) für den Antrieb (11) der Aktuatoren (8) ein Sollmoment oder eine Sollkraft ermittelt, woraus ein Kraft/Moment-Regler (20) einen elektrischen Sollstroms (23) bestimmt, welchen am Antrieb (11) des Aktuators ein Stromregler (21) einstellt.

10. Dämpfungssystem nach Anspruch 9, wobei der Kraft/Moment-Regler (20) eine Abtastrate von zumindest 1 kHz, vorzugsweise zumindest 2 kHz aufweist, und/oder der Stromregler (21) eine Abtastrate von zumindest 10 kHz, vorzugsweise zumindest 20 kHz aufweist

11. Dämpfungssystem nach einem der Ansprüche 3 - 10, wobei die Regelung des Antriebs (11) des Aktuators (8) auch eine Erzeugung elektrischer Energie durch generatorischen Betrieb des Elektromotors ermöglicht.

## Claims

1. Method for damping vibrations of the vehicle body of a two-track vehicle (2) which comprises a passive anti-roll bar (18) with a torsion bar (7) which runs in the vehicle transverse direction and with lever elements (3) which adjoin the said torsion bar (7) at the end side and are connected to the wheel suspension systems (6) of an axle of the vehicle (2) which lie opposite one another, and has, furthermore, two actuators (8) which are assigned to in each case one wheel (6a) of the wheel suspension system, are mounted on the vehicle body (16), are configured as electric motors and have in each case one drive (11), by way of which a torque can be applied to that section (7a) of the anti-roll bar (18) which faces the respective wheel (6a),
and a hydraulic vibration damper (9) being connected in parallel with each actuator (8) in each wheel suspension system (6),
**characterized in that**
the actuators (8) act with the hydraulic vibration dampers (9) as a damping system (1) which is designed in such a way that its natural frequency is decoupled from that of the unsprung mass of the vehicle, with the result that, in interaction with the suitably designed hydraulic vibration dampers, in addition to the vibrations of the vehicle body (16), vertical vibrations of the respective wheel (6a) or of what is known as the unsprung mass are also damped at relatively high frequencies up to the order of magnitude of from 20 Hertz to 30 Hertz and in the frequency range between 0 Hertz and the order of magnitude of 30 Hertz by way of suitable regulation of the drive (11) of the actuators (8) and therefore by way of active introduction of forces into the system.

2. Method according to Claim 1, the actuator drive (11) being regulated on a two-axle vehicle in such a way as to influence the vehicle body movements of travel and/or body roll and/or pitch and/or yaw in the sense of a reduction.

3. Damping system of a two-axle vehicle for carrying out the method according to Claim 1 or 2 with the objective features mentioned in the said claims and with a regulator (20, 21) for the corresponding regulation of the actuator drive (11) which is designed in such a way that vibrations in the frequency range between 0 Hertz and 20 Hertz are damped successfully even without hydraulic vibration dampers (9).

4. Damping system according to Claim 3, the torsion bar (7) of the anti-roll bar (18) being mounted in the actuators (8).

5. Damping system according to either of Claims 3 and 4, the torsion bar (7) consisting of a plurality of individual bars which are arranged in series and are connected to one another fixedly for conjoint rotation, and the anti-roll bar (18) consisting of the torsion bar and the lever elements (3) which are connected fixedly to it on the end side.

6. Damping system according to Claim 5, those individual bars of the torsion bar (7) which lie inside the actuators (8) consisting of a higher-strength material and having a smaller diameter than those individual bars outside the actuators (8).

7. Damping system according to one of Claims 3 to 6, each actuator (8) comprising a hollow shaft arrangement (17), to which a torque can be transmitted by means of a rotor (19), arranged coaxially with respect to it, of the drive (11) or actuator (8), and through which hollow shaft arrangement the torsion bar (7) of the anti-roll bar (18) runs, which torsion bar (7) is connected fixedly to the hollow shaft arrangement (17) for conjoint rotation via a connection (12).

8. Damping system according to Claim 7, a gear mechanism (13) and/or a clutch (14) and/or a brake (15) being provided in the hollow shaft arrangement (17) between the drive (11) and the said connection (12).

9. Damping system according to one of Claims 3 to 8, with a superordinate vehicle vertical-dynamics regulator which determines a setpoint torque or a setpoint force for the drive (11) of the actuators (8) with regard to a desired reduction of vibrations of the vehicle body (16), from which setpoint torque or setpoint force a force/torque regulator (20) defines a setpoint electrical current (23) which a current regulator (21) sets at the drive (11) of the actuator.

10. Damping system according to Claim 9, the force/torque regulator (20) having a sampling rate of at least 1 kHz, preferably at least 2 kHz, and/or the current regulator (21) having a sampling rate of at least 10 kHz, preferably at least 20 kHz.

11. Damping system according to one of Claims 3 to 10, the regulation of the drive (11) of the actuator (8) also making a generation of electrical energy by way of generator operation of the electric motor possible.

## Revendications

1. Procédé d'amortissement de vibrations dans la carrosserie d'un véhicule double trace (2) qui comprend un stabilisateur passif (18) muni d'une barre de torsion (7) qui s'étend dans la direction transversale du véhicule et des éléments de levier (3) adjacents du côté extrémité à ladite barre de torsion et reliés aux suspensions de roue opposées (6) d'un essieu du véhicule (2) et qui comporte en outre deux actionneurs (8) associés chacun à une roue (6a) de la suspension de roue, montés sur la carrosserie de véhicule (16), réalisés sous la forme de moteurs électriques et munis chacun d'un entraînement (11) avec lequel un couple peut être appliqué à la portion (7a) du stabilisateur (18) qui est dirigée vers la roue respective (6a),
et un amortisseur de vibrations hydraulique (9) de chaque suspension de roue (6) étant monté en parallèle avec chaque actionneur (8),
**caractérisé en ce que**
les actionneurs (8) munis des amortisseurs de vibrations hydrauliques (9) fonctionnent comme un système d'amortissement (1) qui est conçu de telle sorte que sa fréquence propre soit découplée de celle de la masse non suspendue du véhicule de façon à amortir, en coopération avec les amortisseurs de vibrations hydrauliques conçus de manière appropriée, en plus des vibrations de la carrosserie de véhicule (16) également des vibrations verticales de la roue respective (6a) ou de ladite masse non suspendue et dans la plage de fréquences comprise entre 0 Hertz et l'ordre de grandeur de 30 Hertz, par une régulation appropriée de l'entraînement (11) des actionneurs (8) et donc par injection active de forces dans le système à des fréquences plus élevées pouvant atteindre l'ordre de grandeur de 20 Hertz à 30 Hertz.

2. Procédé selon la revendication 1, l'entraînement d'actionneur (11) d'un véhicule à deux essieux étant régulé de manière à influer dans le sens d'une réduction sur les mouvements de levage et/ou de roulis et/ou de tangage et/ou de lacet de la carrosserie du véhicule.

3. Système d'amortissement d'un véhicule double trace, ledit système étant destiné à mettre en œuvre le procédé selon la revendication 1 ou 2 et comportant les caractéristiques d'objet mentionnées dans ledit procédé et un régulateur (20, 21) destiné à réguler de manière correspondante l'entraînement d'actionneur (11), qui est conçu de manière à amortir avec succès, même sans amortisseurs de vibrations hydrauliques (9), des vibrations dans la plage de fréquences comprise entre 0 Hertz et 20 Hertz.

4. Système d'amortissement selon la revendication 3, la barre de torsion (7) du stabilisateur (18) étant montée dans les actionneurs (8).

5. Système d'amortissement selon l'une des revendications 3, 4, la barre de torsion (7) comprenant une pluralité de barres individuelles disposées en série et reliées les unes aux autres solidairement en rotation et le stabilisateur (18) comprenant la barre de torsion et les éléments de levier (3) reliés côté extrémité de manière fixe à ladite barre de torsion.

6. Système d'amortissement selon la revendication 5, les barres individuelles de la barre de torsion (7) situées à l'intérieur des actionneurs (8) étant en un matériau plus résistant et ayant un diamètre inférieur à celles situées à l'extérieur des actionneurs (8).

7. Système d'amortissement selon l'une des revendications 3 à 6, chaque actionneur (8) comprenant un ensemble formant arbre creux (17) auquel un couple peut être transmis au moyen d'un rotor (19) de l'entraînement (11) ou d'un actionneur (8), disposé coaxialement audit ensemble, la barre de torsion (7) du stabilisateur (18), qui est reliée solidairement en rotation à l'ensemble d'arbre creux (17) par le biais d'une liaison (12), s'étendant à travers l'ensemble formant arbre creux.

8. Système d'amortissement selon la revendication 7, une transmission (13) et/ou un accouplement (14) et/ou un frein (15) étant prévu dans l'ensemble formant arbre creux (17) entre l'entraînement (11) et ladite liaison (12) .

9. Système d'amortissement selon l'une des revendications 3 à 8, comprenant un régulateur de dynamique verticale de véhicule de niveau supérieur qui, afin de réduire de manière souhaitée des vibrations de la carrosserie de véhicule (16), détermine un couple cible ou une force cible de l'entraînement (11) des actionneurs (8) à partir duquel ou de laquelle un régulateur de force/couple (20) détermine un courant électrique cible (23) qui est réglé par un régulateur de courant (21) au niveau de l'entraînement (11) de l'actionneur.

10. Système d'amortissement selon la revendication 9, le régulateur de force/couple (20) ayant une fréquence d'échantillonnage d'au moins 1 kHz, de préférence d'au moins 2 kHz, et/ou le régulateur de courant (21) ayant une fréquence d'échantillonnage d'au moins 10 kHz, de préférence d'au moins 20 kHz.

11. Système d'amortissement selon l'une des revendications 3 à 10, la régulation de l'entraînement (11) de l'actionneur (8) permettant également de générer de l'énergie électrique grâce à un fonctionnement du moteur électrique en générateur.
